# EUROPEAN PATENT APPLICATION

(11) **EP 1 345 364 A1**
(43) Date of publication of application: **17.09.2003**
(21) Application number: 03005641.0
(22) Date of filing: 12.03.2003
(51) Int. Cl.: H04L 12/56

(54) **Routing control method and routing control apparatus for the same**

(30) Priority: 14.03.2002 JP 2002069986
(71) Applicant: NEC CORPORATION, Tokyo (JP)
(72) Inventor: Yagyu, Tomohiko, Minato-ku, Tokyo (JP)
(74) Representative: Splanemann Reitzner Baronetzky Westendorp Patentanwälte

(57) **Abstract**

In a routing control method in a network supported by a shared restoration system, link data associated with nodes in the network are received. The link data contains data of sharable backup band. The received link data is managed as a link data management table (1). The link data further contains data of an unreserved band for each of links associated with each of the nodes. Also, the sharable backup band data is managed for every share risk group. In this case, the sharable backup band data for the share risk group of a maximum bandwidth may be transmitted to at least a part of the nodes.

## Description

### Background of the Invention

### 1. Field of the Invention

The present invention relates to a route control method and a route control apparatus for the same.

### 2. Description of the Related Art

A network is composed of clients, communication units (hereinafter, to be also referred to as nodes), a network management supervisor (NMS) and a communications line (hereinafter, to be referred to as a link) which connects them. The connection of a communications line by which two nodes or two clients can communicate is called a path. Each node manages a reservation state of a band of the connection link.

Also, it is called provisioning that the NMS sets all nodes on a path, and it is called signaling that a path setting is carried out from a start node to an end node in an order (verse versa) using network protocols such as RSVP (Resource Reservation Protocol). The node carries out the band reservations and switch setting of the link and so on to the path in the provisioning and the signaling. The RSVP is defined in "RFC3209 RSVP-TE: Extensions to RSVP for LSP Tunnels" and so on.

A path setting request is issued from the NMS or the client to the node. A fault restoration type data of the path is contained in the path setting request. As the fault restoration type data, there are a sheared restoration, (1+1) protection (a system in which two paths are provided and a signal is flowed through the two paths at the same time), (1:1) protection (a system in which a backup band to be occupied is reserved), non-protection, and so on.

The node receives a path setting request from the client or the NMS, checks the fault restoration type data contained in the path setting request and determines a method of calculating a backup path. There are two cases for the route calculation of the path; one case that the calculation is carried out by the node which receives the path setting request, and the other case that the NMS calculates route data and sets the route data in the path setting request. At this time, the node or the NMS calculates a route of the path such that a route in which a summation of costs of a link from a start point node to an end point node in the path is the smallest, using only the link in which necessary band specified by the path setting request can be reserved. In this case, it is possible to allocate various costs to links based on a communication rate and the policy of an administrator and so on. The topology data of the network and empty band data of links which are necessary for the route calculation of the path are multi-cast using a protocol such as OSPF (Open Shortest Path First routing) or notified to the NMS by the node. In the method of using the protocol such as OSPF, the node acquires the link data of the node itself and transmits to adjacent nodes. Also, the node transmits the link data received from the adjacent node to other adjacent nodes. When the link data managed by the node itself is changed, the node transmits the link data after change again. The procedure of the transmission (multi-casting or uni-casting) is shown in the Internet draft "draft-katz-yeung-ospf-traffic-06" (reference 1) and "draft-ietf-ccamp-ospf-gmpls-extensions-01" (reference 2). According to the reference 2, the node transmits unreserved band data about the link.

Also, the shared restoration system is described in the Internet draft "draft-li-shared-mesh-restoration-01" (reference 3). In the shared restoration system, when a backup path for fault restoration to a working path is set, the band reserved for the backup path can be shared with a backup path to another working path. Each of the nodes and the links belongs to SRG (Share Risk Group: a group which has a possibility to be downed at the same time due to a fault) set by an administrator. The paths which do not belong to the same SRG never down at the same time due to the fault at a location. Therefore, switching to the same backup band at the fault occurrence at the location is never carried out in the nodes. Therefore, it can be determined that the backup band can be shared by the nodes. In the route calculation for the working path and the backup path, the path is calculated such that the nodes, the link, SRG, and so on do not overlap. Such paths are called disjoint. It is possible to specify how the working path and the backup path are set as disjoint, in the path setting request. For example, when the working path and the backup path are determined based on SRG, it is said that the working path and the backup path are SGR disjoint.

However, in the conventional techniques, the backup band and backup path sharable in the shared restoration system cannot be transmitted (multi-cast or uni-cast). Therefore, it is not possible to calculate the route of the backup path using a sharable backup band or backup path such that a necessary band is minimum.

In conjunction with the above description, a communication network fault restoring system is disclosed in Japanese Laid Open Patent Application (JP-A-Heisei 9-307577). In this conventional example, a working path as a route between nodes in which data to be transmitted is not changed has a group of signals to which same fault restoration capability is required. A part of the currently used link is composed of a plurality of working paths or backup paths to which almost same fault restoration capability is required. One of the first to fourth spare resource preparing modes is used as s spare resource preparation mode to the working path in accordance with the fault restoration capability. In the first spare resource preparing mode, a backup path of an exclusive use for the working path is prepared. In the second spare resource preparing mode, a backup path is prepared to share with another backup path to the working path. In the third spare resource preparing mode, a spare link of an exclusive use is prepared to a part of the currently used link in which a part of the working paths is accumulated or to a continued part of a plurality of partial currently links. In the fourth spare resource preparing mode, a share path is prepared to share with another spare link to a part of the currently used link in which a part of the working paths is accumulated or to a continued part of a plurality of partial currently used links. Thus, a communication network can be configured to have a path with a cost determined in accordance with fault restoration capability to the network in which various fault restoration rates are required.

Also, a communication network fault restoration system is disclosed in Japanese Laid Open Patent Application (JP-A-Heisei 10-65686). In this conventional example, a route of a backup path is secured in fault occurrence in a communication network. The communication network fault restoration system is composed of a transmission apparatus, a communication line, a terminal, a network management system and a control line at least. The network management system controls the transmission apparatus through the control line, and manages a remaining transmission band in the communication network. Also, the network management system opens the transmission band of the path using a fault communication line in case of the fault occurrence. In addition, the network management system carries out the determination to determine a spare route in case of the fault occurrence based on a class of a plurality of fault restoration classes set to each path, and switches to the backup path route.

Also, a fault restoration system in a communication network is disclosed in Japanese Laid Open Patent Application (JP-A-Heisei 10-285174). This convention example is related to a connection-oriented communication network which uses a protocol by which line connection is carried out using a source routing method in which a rout calculation is carried out based on topology data exchanged between nodes. The fault restoration system sets a route to avoid a fault when the fault has occurred in a multipoint connection to which a plurality of terminals are connected. The node includes a management judgment section for determining whether management of a multipoint participation terminal under the self-node should be carried out, in the setting of the multipoint connection. A database stores management data when it is judged by the management judgment section that the management of the multipoint participation terminal should be carried out. A notice section notifies the management data of the database to the node as a candidacy for the management of another multipoint participation terminal. An avoidance process judgment section carries out the judgment of whether the self-node carries out an avoidance process based on a position relationship between the fault point and the self-node in response to the occurrence of the fault. A route calculation section calculates the spare route which avoids the fault point, to the connection managed by the self-node based on the data of the database when it is judged to carry out the avoidance process by the avoidance process judgment section. A route setting section sets the spare route based on spare route data obtained by the route calculation section when it is judged to carry out the avoidance process by the avoidance process judgment section. A switching section switches between the spare route and the route in which the fault has occurred.

Also, a fault restoration method is disclosed in Japanese Laid Open Patent Application (JP-A P2000-165425A). In this conventional reference, a communication network is composed of a plurality of communication nodes to carry out the insertion and separation of a signal, and a plurality of transmission paths. The plurality of communication nodes forms a first ring, a second ring, a third ring and a fourth ring at least so as to form a same network topology by the connection of the plurality of transmission paths. In the first ring, a current use signal is transmitted clockwise or counterclockwise. Spare resources to the current use signal in the first ring are shared by the first ring and the second ring in which a signal is transmitted in an opposite direction. In the third ring, a current use signal is transmitted in a direction opposite to the direction in the first ring. Spare resources to the current use signal in the third ring are shared by the third ring and the fourth ring in which a signal is transmitted in an opposite direction. In the first communication in which the i-th communication node in the plurality of communication nodes inserts a signal and the signal is terminated by the j-th communication node via the first ring, when the j-th communication node detects a fault of the first communication, the j-th communication node sends out a request message to the i-th communication node to use the second ring and to avoid the route of the first communication. When receiving the request message, the i-th communication node switches the communication route of the first communication from the first ring to the second ring to carry out fault restoration in the first communication. In the second communication in which the m-th communication node in the plurality of communication nodes inserts a signal and the signal is terminated by the n-th communication node via the third ring, when the n-th communication node detects a fault of the second communication, the n-th communication node sends out a request message to the m-th communication node to use the fourth ring and to avoid the route of the second communication. When receiving the request message, the m-th communication node switches the communication route of the second communication from the third ring to the fourth ring to carry out fault restoration in the first communication.

Also, a method of operating a path network is disclosed in Japanese Laid Open Patent Application (JP-A P2001-197083A). This conventional reference relates to the path network operating method in which communication is carried out between nodes using one or more working paths and one or more backup paths. A path signal is transmitted from a transmission node to a reception node through the working path and the backup path. The backup path is converted into the working path temporarily to increase a band in the working path when a band increase request is generated in the path network. In the transmission, the transmission node transmits the path signal which is obtained by giving a path overhead to a client signal. The path overhead contains automatic path conversion data which is used to convert the backup path into the working path. In the conversion, the transmission node and the reception node convert the backup path into the working path using the automatic path diversion data contained in the path overhead.

### Summary of the Invention

Therefore, an object of the present invention is to provide a route control method and a route control apparatus for the same, in which data of a sharable backup band or backup path in shared restoration system is transmitted, a route of the backup path is calculated using the data, and a link can be restored from a fault in a minimum quantity of backup band.

In an aspect of the present invention, a routing control method in a network supported by a shared restoration system, is achieved by receiving and transmitting link data associated with nodes in the network, the link data containing data of sharable backup band; and by managing the received link data as a link data management table.

Here, it is desirable that the link data further contains data of an unreserved band for each of links associated with each of the nodes. Also, the sharable backup band data is desirably managed for every share risk group. In this case, the sharable backup band data for the share risk group of a maximum bandwidth may be transmitted to at least a part of the nodes.

Also, the link data management table is desirably updated based on a received new link data associated with one of the nodes when the new link data is received.

Also, the routing control method may contains the steps of (a) referring to the link data management table in response to a path setting request to determine a working path from a first node to a second node; and (b) referring to the link data management table in response to the determination of the working path to determine a backup path to the working path.

Also, the routing control method may contains the step of updating a part of the link data of the link data management table based on the working path and the backup path. In this case, the updated link data part is desirably notified to at least a part of the nodes.

Also, the link data of the working path is desirably registered as a logical link on the link data management table.

In another aspect of the present invention, a routing control apparatus in a network supported by a shared restoration system includes a link data management table; and a communication section which receives and transmitting link data associated with nodes in the network, and registers the received link data on the link data management table. The link data contains data of sharable backup band.

Here, the link data may further contain data of an unreserved band for each of links associated with each of the nodes. Also, it is desirable that the sharable backup band data is managed for every share risk group. The communication section may transmit the sharable backup band data for the share risk group of a maximum bandwidth to at least a part of the nodes.

Also, the communication section may update the link data management table based on a received new link data associated with one of the nodes when the new link data is received. The routing control apparatus may further include a route calculating section which determines a working path from a first node to a second node based on the link data management table in response to a path setting request, and determines a backup path to the working path. In this case, the communication section may update a part of the link data of the link data management table based on the working path and the backup path. Also, the communication section may notify the updated link data part to at least a part of the nodes.

Also, the communication section may register the link data of the working path as a logical link on the link data management table.

Also, the routing control apparatus may be provided in a network management supervisor which is connected with the nodes, or in each of the nodes.

### Brief Description of the Drawings

Fig. 1 is a block diagram showing the structure of a route control apparatus according to a first embodiment of the present invention;
Fig. 2 is a diagram showing an example of the network configuration to which the route control apparatus according to the first embodiment of the present invention is applied;
Fig. 3 is a diagram showing the structure of a link data table before a working path is set, in the first embodiment;
Fig. 4 is a diagram showing the structure of the link data table after the working path and a backup path are set, in the first embodiment;
Fig. 5 is a diagram showing the structure of the link data table after another working path and the backup path are set, in the first embodiment;
Fig. 6 is a diagram showing a path setting state after the other working path and the backup path are set, in the first embodiment;
Fig. 7 is a diagram showing a network configuration after a working path and a backup path are set in the route control apparatus according to a second embodiment of the present invention;
Fig. 8 is a diagram showing the structure of the link data table in which a logic link is set, after the working path and the backup path are set in the second embodiment;
Fig. 9 is a diagram showing the structure of the link data table, in which the logic link is set, after another working path and the backup path are set in the second embodiment; and
Fig.10 is a diagram showing the path setting state after the other working path and the backup path are set in the second embodiment.

### Description of the Preferred Embodiments

Hereinafter, a route control method and a route control apparatus for the same, according to the present invention will be described in detail with reference to the attached drawings.

### (First Embodiment)

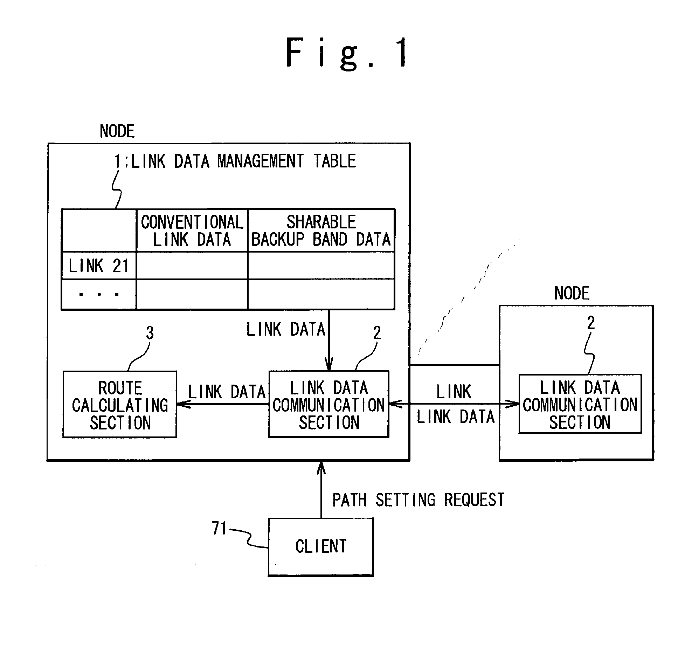

Fig. 1 shows the route control apparatus according to the first embodiment of the present invention. In the first embodiment, the route control apparatus is realized in each of nodes. Referring to Fig. 1, the route control apparatus in the first embodiment is composed of a link data management table 1, a link data communication section 2 and a route calculating section 3. The link data management table manages a sharable backup band in addition to the conventional link data. The route calculating section 3 calculates a route of a backup path to a working path. The link data communication section 2 adds sharable backup bands and sharable backup paths received from another node to the link data management table 1, changes or updates the link data management table 1 in accordance with the calculation result by the route calculating section 3, transmits data of a sharable backup band and backup path changed in a shared restoration system to adjacent node(s). The transmission may be multi-casting or uni-casting.

The node manages the sharable backup band data in the link data management table 1 in addition to conventional link data. Also, the sharable backup path is managed as a logical link as if all bands are sharable backup bands. The data of sharable backup band and sharable backup path contains data of SRG to which the working path protected by the backup path belongs. The link data communication section 2 acquires link data of the self-node which contains the data of the sharable backup band and sharable backup path from the link data management table 1 and transmits to adjacent nodes. Also, the link data communication section 2 transfers the link data received from another node to the route calculating section 3.

When a fault restoration system of a received path setting request is a shared restoration system, the route calculating section 3 calculates the routes of the working path and backup path such that the path is the shortest and the bands necessary to newly reserve is the least under the condition that all the sharable backup bands are usable for the backup path, in addition to the data of the unreserved band.

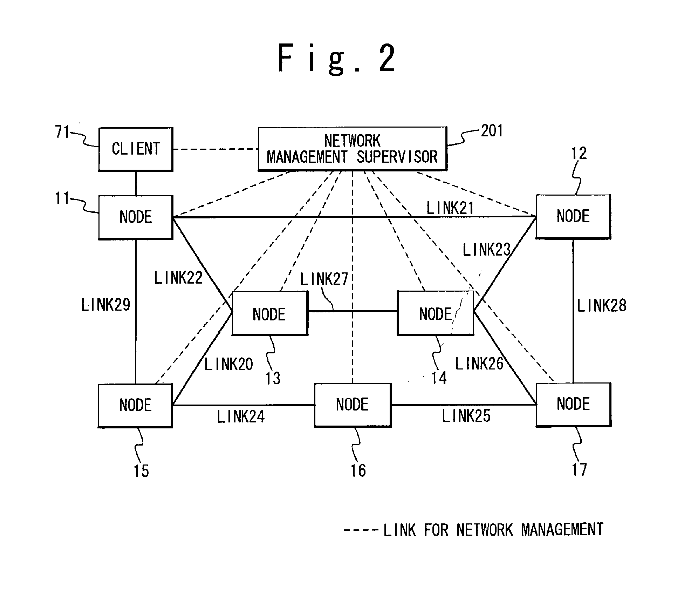

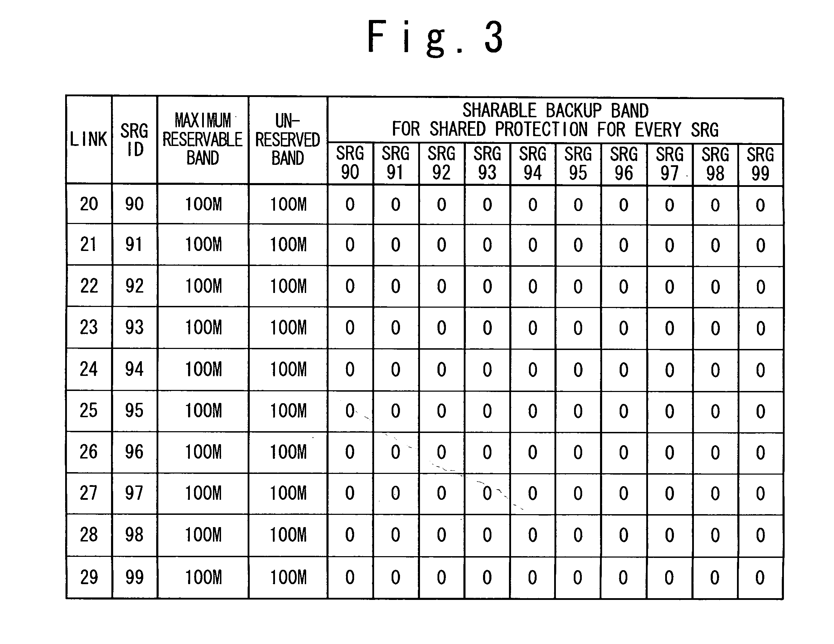

Next, a path setting procedure in the network configuration shown in Fig. 2 will be described. Referring to Fig. 2, there are the nodes 11 to 17 in the network. The nodes 11 to 17 are connected with a network management supervisor 201 by links for network management. A client 71 is connected with the node 11. Each of the nodes manages the sharable backup band for every SRG under the condition that any path is not set. Fig. 3 shows the link data in the initial state. It is supposed the cost of each of links between the nodes to be 1. It should be noted that the cost of the link is a measure used to determine the route to be selected when a path is set, and is a value set based on a communication rate and a policy of the administrator.

The client 71 first issues a path setting request to a node 11 to set a path from the node 11 to the node 17 that the fault restoration system is a shared restoration system and the communication rate is 10 Mbps. In this case, the disjoint is supposed to be based on SRG. Below, this path is called a path 101.

The route calculating section 3 of the node 11 calculates the shortest route first by referring to the link data management table 1 through the communication section 2. In this case, the shortest route is {Node 11 - link 21 - node 12 - link 28 - node 17}, as shown in Fig. 2. As seen from the link data management table 1 shown in Fig. 3, the SRG to which this path 101 belongs is {SRG91, SRG98}

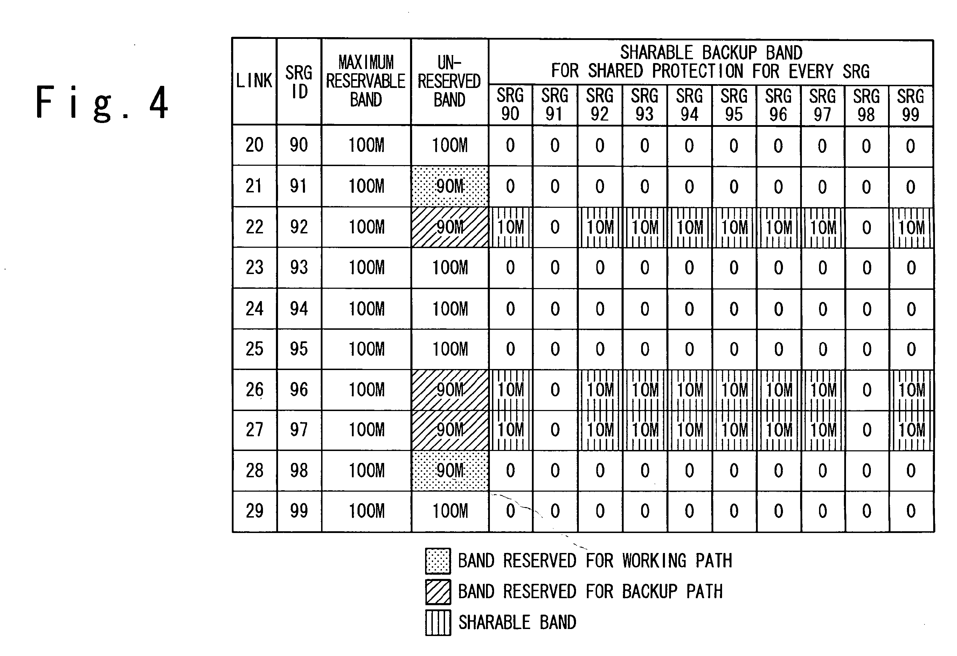

After that, the route calculating section 3 of the node 11 calculates the working path and the SRG disjoint backup path. As the route of the backup path, {node 11 - link 22 - node 13 - link 27 - node 14 - link 26 - node 17} is calculated. When the calculation of the route by the route calculating section 3 ends, the path setting is carried out like the conventional example. Fig. 4 shows the link data after the setting of the working path 101 and the backup path of the path 101. As shown in Fig. 4, the unreserved band for each of the links 21 and 28 is reduced by 10 Mbps, because the links 21 and 28 are used for the working path 101. The unreserved band for each of the links 22, 26 and 27 is also reduced by 10 Mbps because the links 22, 26 and 27 are used for the backup path to the working path 101. In addition, the sharable backup band for the shared restoration system is set to "0" for SRG corresponding to each of the links 21 and 28. These links are used for the working path 101. "10 Mbps" is registered to the SRG corresponding to each of the other links to indicate that the band for 10 Mbps is used.

When the path setting completes, the node managing the link, the unreserved band of which has been set, transmits the updated link data. That is, the node 11 transmits (multi-casts or uni-casts) the link data of link 22 to the adjacent node(s) in addition to the sharable backup band data for every SRG and the conventional link data. Here, the conventional link data is such as link type, link ID, local interface IP address, remote interface IP address, traffic engineering metric, maximum bandwidth, maximum reservable bandwidth, unreserved bandwidth and resource class/color in the above reference "Traffic engineering Extensions to OSPF". Also, the conventional link data is such as link type, link ID, local interface IP address, remote interface IP address, traffic engineering metric, maximum bandwidth, maximum reservable bandwidth, unreserved bandwidth, resource class/color, link local identifier, link remote identifier, link protection type, interface switching capability descriptor, and shared risk link group in the above reference "OSPF Extensions in Support of Generalized MPLS". In the same way, the node 14 transmits the link data of the link 27, and the node 17 transmits the link data of the link 26. Also, each of the nodes transfers the link data from one node to another node. Thus, each of the nodes can obtain all the link data in the network.

Next, the client 71 issues a path setting request to the node 11 to set a path of 10 Mbps from the node 11 to the node 17 via the nodes 15 and 16. In this case, the fault restoration type is a shared restoration system. This path is supposed to be a path 102. The route calculating section 3 of the node 11 calculates {node 11 - link 29 - node 15 - link 24 - node 16 - link 25 - node 17} as the shortest path satisfying the path setting request from the client 71 and this path is set as a working path 102. The SRGs of the working path 102 are {SRG99, SRG94, SRG95}.

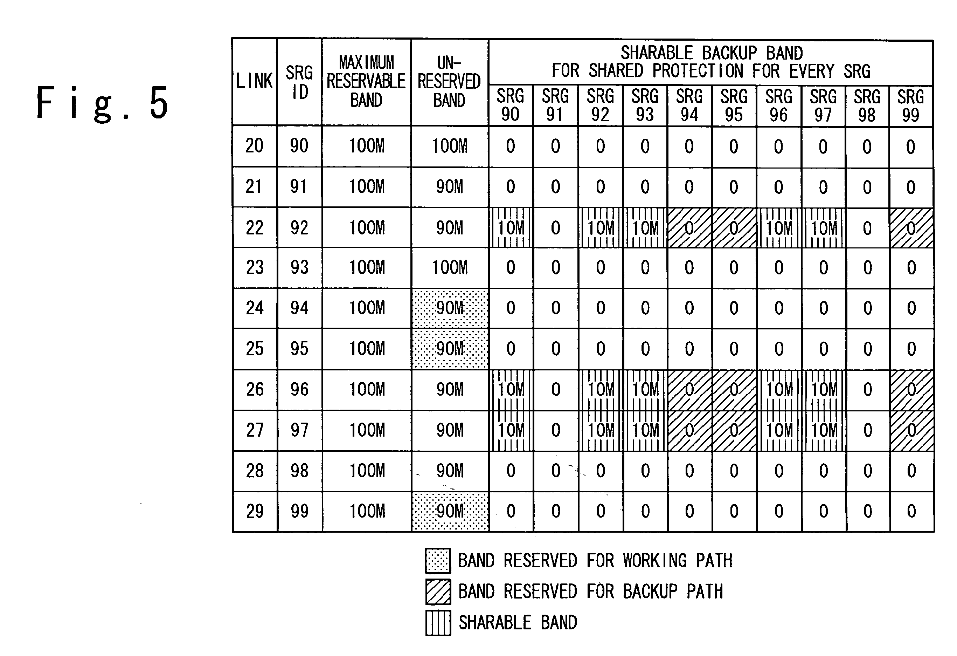

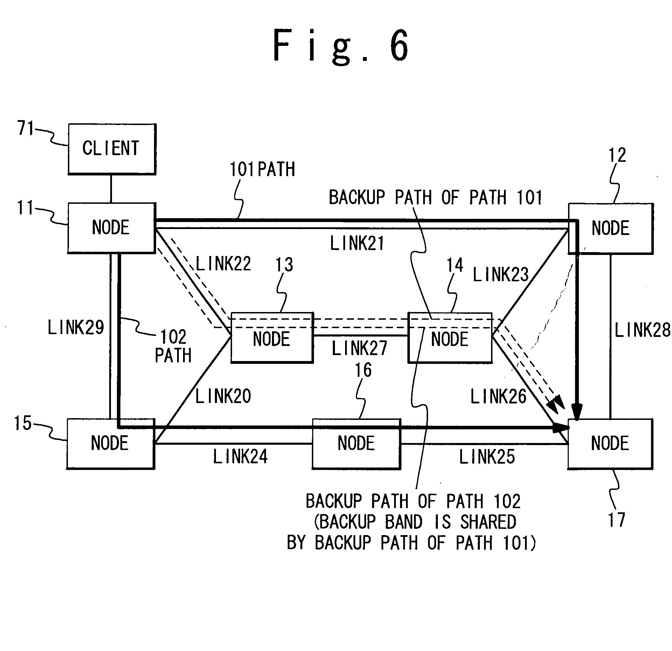

After that, the route calculating section 3 calculates a backup path which is SRG disjoint to the working path 102. As the candidates of the backup path, there are {node 11 - link 21 - node 12 - link 28 - node 17}, {node 11 - link 22 - node 13- link 27 - node 14- link 26 - node 17}, {node 11 - link 21 - node 12 - link 23 - node 14 - link 26 - node 17}, and {node 11- link 22 - node 13 - link 27- node 14 - link 23 - node 12 - link 28 - node 17}. Here, the node 11 calculates the unreserved band newly consumed for each route. Then, the node 11 selects the route with the least consumption of the unreserved band for these routes as the best backup route. In this case, the route of {node 11 - link 22 - node 13 - link 27 - node 14 - link 26 - node 17} can share the backup path with the working path 101 among all the routes. Also, the unreserved band is never consumed. Therefore, this route is selected as the backup route. Fig. 5 shows a link state after the working path 102 and the backup path to the working path 102 are set, and Fig. 6 shows the situation of the path. As shown in Fig. 5, in the link state after the working path 102 and the backup path are set, "0" is set for SRG corresponding to each of the links 29, 24 and 25 in the sharable backup band of the shared restoration for the links 22, 26, and 27. On the other hand, "10 Mbps" is maintained for the SRG corresponding to each of the remaining links.

Then, when the path setting completes like the conventional case, the node which manages the link with the reservation band changed transmits the updated link data. The node 11 transmits the link data of the link 22 to the adjacent nodes in addition to not only the sharable backup band data for every SRG but also the above conventional link data. In the same way, the node 14 transmits the link data of the link 27, and the node 17 transmits the link data of the link 26.

In this way, in this embodiment, the data of the sharable backup band of each link in the network is managed for every SRG. The data is transmitted to all the nodes or the network management supervisor 201 in the network. Therefore, the shared backup band for the fault restoration of the shared restoration system can be suppressed in minimum and the network band can be efficiently used.

### (Second Embodiment)

Next, the route control apparatus according to the second embodiment of the present invention will be described. The route control apparatus in the second embodiment has the same configuration as the first embodiment and carries out the same process as in the first embodiment, to a process in which the working path 101 is set. Therefore, the description is omitted.

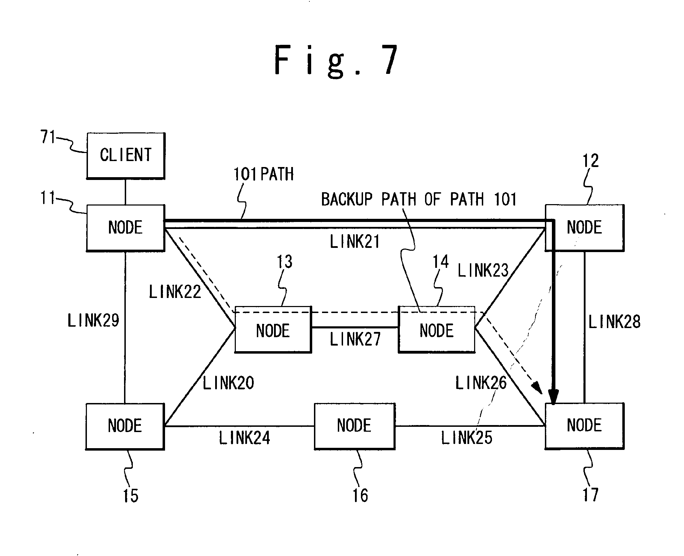

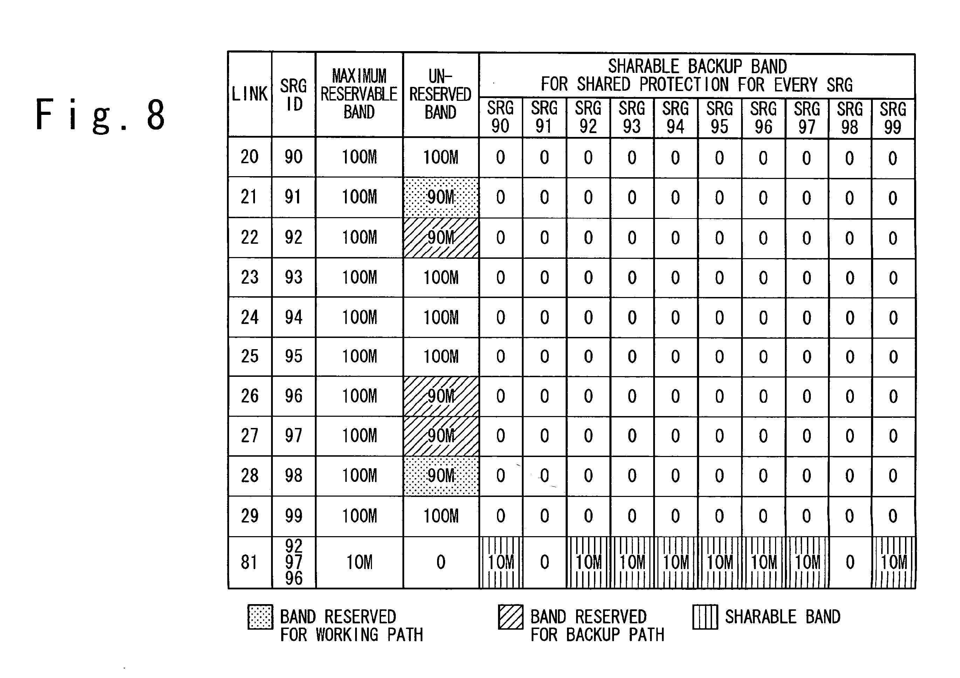

After the working path 101 is set, the node 11 and the node 17 transmits the sharable reserved band for every SRG as a logical link of the backup path of the working path 101 together with the conventional link data. It is supposed to be a logical link 81. Fig. 7 shows the network configuration after the working path 101 and the backup path are set, and Fig. 8 shows the link state. The unreserved band of the link 81 is "0", and a sharable backup band for every SRG is transmitted to be "0" to SRG of each of the links of the working path 101, i.e, (SRG IDs of [91] and [98]) and is transmitted to be "10 Mbps" to SRG other than the SRGs corresponding to the links 21 and 28, i.e., (SRG Ids of [90], [92], [93], [94], [95], [96], [97], and [99]). Also, the node 13 and the node 14 in the route of the backup path of the working path 101 transmit only the change of the unreserved band. That is, the node 13 transmits that the unreserved bands of the link 22 and link 27 are "90 Mbps", and the node 14 transmits that the unreserved bands of link 26 and link 27 are "90 Mbps".

Next, it is supposed that the path setting request of a path 102 is received from the client 71 like the first embodiment. The route calculating section 3 of the node 11 calculates {node 11 - link 29 - node 15 - link 24 - node 16 - link 25 - node 17} as the shortest path satisfying the path setting request from the client 71, and sets a working path of the path 102. The SRGs of this working path are {SRG99, SRG94, and SRG95}.

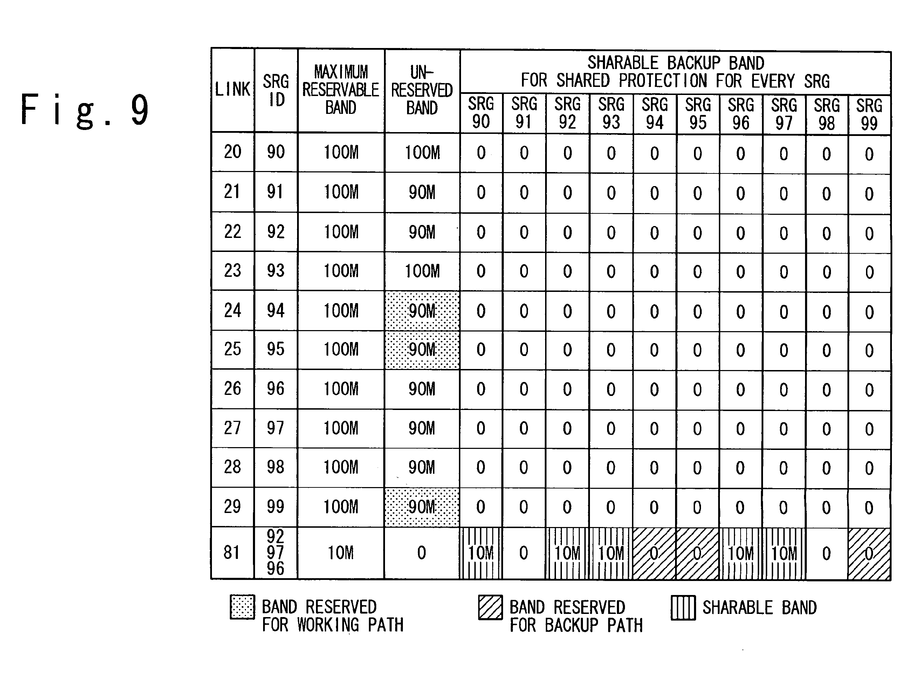

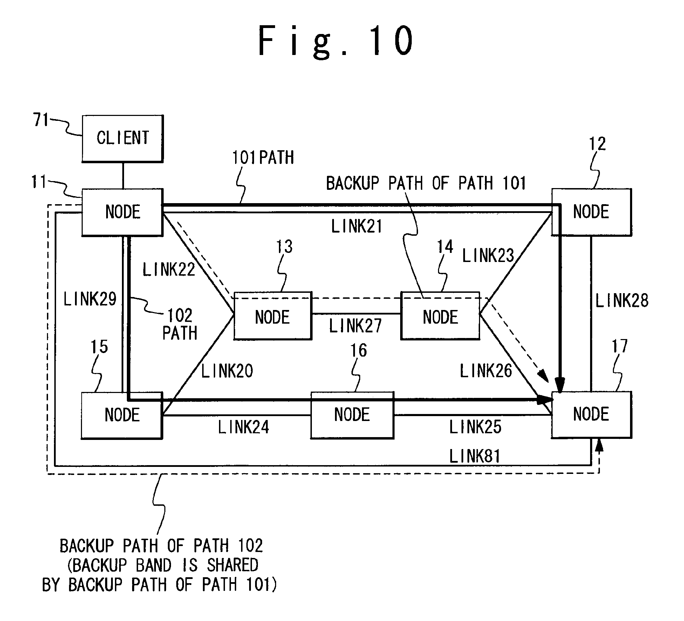

After that, the node 11 calculates the backup path which does not overlap with this working path. As the backup path, there are candidates {node 11 - link 81 - node 17}, {node 11 - link 21 - node 12 - link 28 - node 17}, {node 11 - link 22 - node 13 - link 27 - node 14 - link 26 - node 17}, {node 11 - link 21 - node 12 - link 23 - node 14 - link 26 - node 17}, and {node 11 - link 22 - node 13 - link 27 - node 14 - link 23 - node 12 - link 28 - node 17}. Here, the node 11 calculates an unreserved band used newly for each route. Then, the node 11 selects a route with the least unreserved band to be used among these routes as the best backup route. In this case, the route of {node 11 - link 81 - node 17} can share a backup band of the working path 101 in all the links, and the unreserved band is never used. Therefore, this route path is selected as the backup route. Fig. 9 shows a link state after the path 102 is set, and Fig. 10 shows the situation of the path.

After the working path 102 and the backup path are set, the node 11 and the node 17 transmit the sharable reserved band for every SRG in addition to the conventional link data, using the backup path common to the path 101 and path 102 as the logical link. That is, the node 11 and the node 17 transmit the following matters. That is, the unreserved band of the link 81 is "0". The sharable backup band for every SRG is "0" to the SRG of each of the links corresponding to the path 101 and path 102, i.e., (SRG IDs of [91], [94], [95], [98], and [99]). Also, the sharable backup band for every SRG is "10 Mbps" to SRGs other than the above SRGs, i.e., (SRG Ids of [90], [92], [93], [96], and [97]). Also, the node 15 on the route of the path 102 transmits the change of the unreserved band of the link 29 and the link 24, and the node 16 transmits the change of the unreserved band of the link 24 and the link 25.

The backup band for the fault restoration of the shared restoration system in the second embodiment can be suppressed to the minimum, and the network band can be efficiently used, like the above-mentioned first embodiment.

### (Third Embodiment)

Next, the route control apparatus according to the third embodiment of the present invention will be described. The third embodiment has the same configuration as the first embodiment and carries out the same process as in the first embodiment, to the process in which o the path 101 is set. Therefore, the description is omitted.

When the path setting completes, the node managing the link with the reserved band changed transmits the updated link data. The node 11 transmits the link data of the link 22 together with maximum value data of the sharable backup band for every SRG in addition to the conventional link data. That is, the bandwidth data of SRG having the maximum bandwidth of the sharable backup bands is transmitted. In this case, the sharable backup band for every SRG of the link 22 is 10 Mbps in SRG IDs of [92], [93], [94], [95], [96], [97], and [99], as shown in Fig. 4. Therefore, the maximum value data of 10 Mbps is notified. It should be noted that, the node 14 and the node 17 transmit the maximum bandwidth data for SRG with the maximum band among the sharable backup bands is transmitted together with the conventional link data, in the same way.

Next, when the path setting request of the path 102 is received, the route is calculated like the first embodiment. However, the different point is in that a backup path is calculated under a condition that the sharable backup band is usable to the received maximum value.

Depending on the SRG of the working path, there is a possibility that the usable sharable backup band is smaller than the maximum backup band transmitted from the node 11. When such a link is used as a route of the backup path, the path setting fails at the time of the signaling or provisioning, and the route calculation needs to be carried out once again.

However, the number of SRG would increase to a very large number. In this case, a link data quantity to be transmitted becomes large in proportional to it. The amount of data to be transmitted can be suppressed by transmitting only the maximum value of the sharing possible band.

It should be noted that the above-mentioned embodiments are the preferred embodiments of the present invention. However, the present invention is not limited to them, and various modifications are possible in the scope which is not deviated from the spirit of the present invention. For example, in the above-mentioned embodiment, the link data management table 1, the link data transmitting and receiving section 2, and the route calculating section 3 are provided in the node, as shown in Fig. 1. However, they may be provided for the network management supervisor 201, and the network management supervisor 201 may calculate a route based on the link data. In this case, the path setting request is supplied to the network management supervisor 201 from the client through a node. The network management supervisor 201 may broadcast the updated link data to all the nodes or a part of the nodes.

As understood from the above description, the present invention can suppress the backup band to a minimum in the fault restoration of the shared restoration system, and can use the network band efficiently.

## Claims

1. A routing control method in a network supported by a fault restoration system, comprising the steps of:
receiving and transmitting link data associated with nodes in said network, said link data containing data of sharable backup band; and
managing the received link data as a link data management table.

2. The routing control method according to claim 1, wherein said link data further contains data of an unreserved band for each of links associated with each of said nodes.

3. The routing control method according to claim 1 or 2, wherein said sharable backup band data is managed for every share risk group.

4. The routing control method according to claim 3, further comprising the step of:
transmitting said sharable backup band data for the share risk group of a maximum bandwidth to at least a part of said nodes.

5. The routing control method according to any of claims 1 to 4, further comprising the step of:
updating said link data management table based on a received new link data associated with one of said nodes when said new link data is received.

6. The routing control method according to any of claim 1 to 5, further comprising the steps of:
(a) referring to said link data management table in response to a path setting request to determine a working path from a first node to a second node; and
(b) referring to said link data management table in response to the determination of said working path to determine a backup path to said working path.

7. The routing control method according to claim 6, further comprising the step of:
updating a part of said link data of said link data management table based on said working path and said backup path.

8. The routing control method according to claim 7, further comprising the step of:
notifying the updated link data part to at least a part of said nodes.

9. The routing control method according to claim 6, further comprising the step of:
registering said link data of said working path as a logical link on said link data management table.

10. A routing control apparatus in a network supported by a fault restoration system, comprising:
a link data management table (1); and
a communication section (2) which receives and transmits link data associated with nodes in said network, and registers the received link data on said link data management table, said link data containing data of sharable backup band.

11. The routing control apparatus according to claim 10, wherein said link data further contains data of an unreserved band for each of links associated with each of said nodes.

12. The routing control apparatus according to claim 10 or 11, wherein said sharable backup band data is managed for every share risk group.

13. The routing control apparatus according to claim 12, wherein said communication section transmits said sharable backup band data for the share risk group of a maximum bandwidth to at least a part of said nodes.

14. The routing control apparatus according to any of claims 10 to 13, wherein said communication section updates said link data management table based on a received new link data associated with one of said nodes when said new link data is received.

15. The routing control apparatus according to any of claim 10 to 14, further comprising:
a route calculating section (3) which determines a working path from a first node to a second node based on said link data management table in response to a path setting request, and determines a backup path to said working path.

16. The routing control apparatus according to claim 15, wherein said communication section updates a part of said link data of said link data management table based on said working path and said backup path.

17. The routing control apparatus according to claim 16, wherein said communication section notifies the updated link data part to at least a part of said nodes.

18. The routing control apparatus according to claim 15, wherein said communication section registers said link data of said working path as a logical link on said link data management table.

19. The routing control apparatus according to any of claims 10 to 18, wherein said routing control apparatus is provided in a network management supervisor which is connected with said nodes.

20. The routing control apparatus according to any of claims 10 to 18, wherein said routing control apparatus is provided in each of said nodes.
